# EUROPEAN PATENT APPLICATION

(11) **EP 1 677 427 A2**
(43) Date of publication of application: **05.07.2006**
(21) Application number: 05012221.7
(22) Date of filing: 07.06.2005
(51) Int. Cl.: H04B 1/40, H04H 1/00

(54) **Wireless stereo synchronizing transceiver**

(30) Priority: 29.12.2004 CN 200420122296
(71) Applicant: Seikaku Technical Group Limited, Kowloon Hong Kong (HK)
(72) Inventor: Yang, Ming-Lung, Kowloon, Hong Kong (HK)
(74) Representative: Becker Kurig Straus

(57) **Abstract**

A wireless stereo synchronizing transceiver is disclosed to include a receiving processing unit having a mixer circuit, a transmitting processing unit, which has a stereo modulating mixing circuit and a first voltage control oscillator circuit connected to the stereo modulating mixing circuit, and a synchronizing processing unit, which has a second voltage control oscillator circuit connected to the mixer circuit of the receiving processing unit, a frequency synthesizer being electrically connected in parallel to the first voltage control oscillator circuit and the second voltage control oscillator circuit, and a processor electrically connected to the frequency synthesizer.

## Description

### BACKGROUND OF THE INVENTION

### 1. Field of the Invention

The present invention relates generally to a transceiver and more particularly, to a wireless stereo synchronizing transceiver.

### 2. Description of the Related Art

A conventional wireless transmission apparatus generally comprises a transmitter and a receiver separately provided for transmitting or receiving signal. In order to reduce the size and to save the cost, the transmitter and the receiver may be set in a common base, forming a transceiver. However, because the transmitting circuit and the receiving circuit of a transceiver are two independent circuits, the circuit design is still complicated, resulting in a high cost.

### SUMMARY OF THE INVENTION

The present invention has been accomplished under the circumstances in view. It is one object of the present invention to provide a wireless stereo synchronizing transceiver, which allows the apparatus to receive wireless signal and to transmit wireless signal at the same time. It is another object of the present invention to provide a wireless stereo synchronizing transceiver, which greatly reduces the number of parts and dimensions of the apparatus, and simplifies the circuit design.

To achieve these and other objects of the present invention, the wireless stereo synchronizing transceiver comprises a receiving processing unit, which comprises a mixer circuit, a transmitting processing unit, which comprises a stereo modulating mixing circuit and a first voltage control oscillator circuit electrically connected to the stereo modulating mixing circuit, and a synchronizing processing unit, which comprises a processor, a frequency synthesizer electrically, and a second voltage control oscillator circuit. The processor is electrically connected to the frequency synthesizer. The frequency synthesizer is electrically connected in parallel to the first voltage control oscillator circuit and the second voltage control oscillator circuit. The second voltage control oscillator circuit is electrically connected to the mixer circuit of the receiving processing unit.

### BRIEF DESCRIPTION OF THE DRAWINGS

FIG. 1 is a system block diagram of the present invention.

FIG. 2 is a circuit diagram of the present invention.

### DETAILED DESCRIPTION OF THE INVENTION

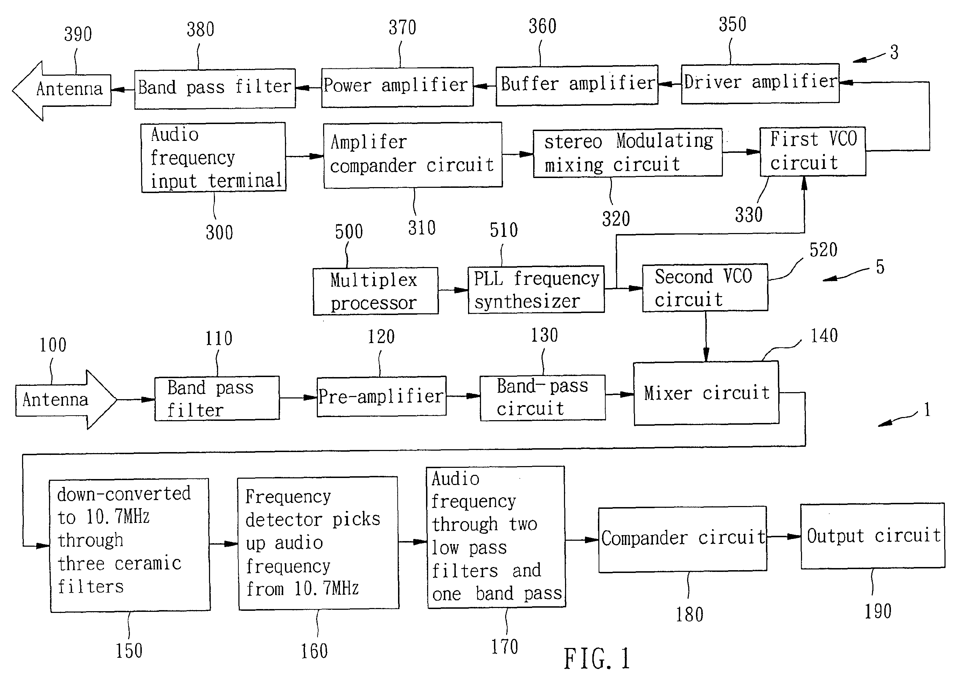

Referring to FIG. 1, a wireless stereo synchronizing transceiver in accordance with the present invention generally comprises a receiving processing unit **1,** a transmitting processing unit **3,** and a synchronizing processing unit **5.**

The receiving processing unit **1** comprises:
an antenna **100** for receiving wireless signal;
a band pass filter **110** electrically connected to the antenna **100;**
a pre-amplifier **120** electrically connected to the band pass filter **110;**
a band-pass circuit **130** electrically connected to the pre-amplifier **120;**
a mixer circuit **140** electrically connected to the band-pass circuit **130;**
a down-converter **150** electrically connected to the mixer circuit **140;**
an intermediate frequency processor **160** electrically connected to the down-converter **150;**
a low frequency processor **170** electrically connected to the intermediate frequency processor **160;**
an compander circuit **180** electrically connected to the low frequency processor **170;** and
an output circuit **190** electrically connected to the compander circuit **180** for outputting audio frequency signal to external audio output devices.

The transmitting processing unit **3** comprises:
an audio frequency input terminal **300;**
an amplifier compander circuit **310** electrically connected to the audio frequency input terminal **300;**
a stereo modulating mixing circuit **320** electrically connected to the amplifier compander circuit **310;**
a first VCO (Voltage Control Oscillator) circuit **330** electrically connected to the stereo modulating mixing circuit **320;**
a driver amplifier **350** electrically connected to the first VCO circuit **330;**
a buffer amplifier **360** electrically connected to the driver amplifier **350;**
a power amplifier **370** electrically connected the buffer amplifier **360** and forming with the driver amplifier **350** and the buffer amplifier **360** an amplifier assembly;
a band pass filter **380** electrically connected to the power amplifier **370;** and
an antenna **390** electrically connected to the band pass filter **380.**

The synchronizing processing unit 5 comprises a multiplex processor **500,** a frequency synthesizer, for example, a PLL (Phase Locked Loop) frequency synthesizer **510,** and a second VCO (Voltage Control Oscillator) circuit **520.** The multiplex processor **500** is electrically connected to the PLL frequency synthesizer **510.** The PLL frequency synthesizer **510** is connected in parallel to the first VCO circuit **330** and the second VCO (Voltage Control Oscillator) circuit **520.** The second VCO circuit **520** is electrically connected to the mixer circuit **140** of the receiving processing unit **1.**

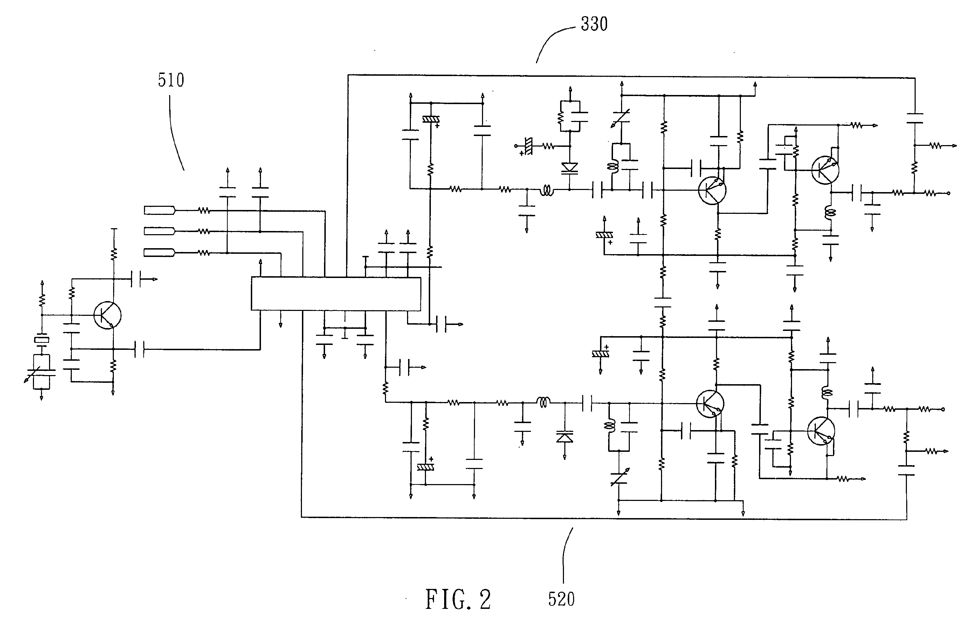

Referring to FIG. 2, by means of the multiplex processor **500** and the PLL frequency synthesizer **510,** the synchronizing processing unit **5** controls the first VCO circuit **330** as well as the second VCO circuit **520.** Further, because the second VCO circuit **330** is electrically connected to the mixer circuit **140** of the receiving processing unit **1,** the synchronizing processing unit **5** controls the receiving processing unit 1 and the transmitting processing unit **3** to work at the same time, i.e., the invention allows signal receiving and signal transmitting at the same time.

As indicated above, the invention has the following features:
1. The wireless stereo synchronizing transceiver of the present invention allows the apparatus to receive wireless signal and to transmit wireless signal at the same time.
2. The wireless stereo synchronizing transceiver of the present invention reduces the number of parts and dimensions of the apparatus, and simplifies the circuit design.

## Claims

1. A wireless stereo synchronizing transceiver comprising:
a receiving processing unit, said receiving processing unit comprising a mixer circuit;
a transmitting processing unit, said transmitting processing unit comprising a stereo modulating mixing circuit and a first voltage control oscillator circuit electrically connected to said stereo modulating mixing circuit; and
a synchronizing processing unit, said synchronizing processing unit comprising a processor, a frequency synthesizer electrically, and a second voltage control oscillator circuit, said processor being electrically connected to said frequency synthesizer, said frequency synthesizer being electrically connected in parallel to said first voltage control oscillator circuit and said second voltage control oscillator circuit, said second voltage control oscillator circuit being electrically connected to said mixer circuit of said receiving processing unit.

2. The wireless stereo synchronizing transceiver as claimed in claim 1, wherein said transmitting processing unit further comprises an amplifier assembly electrically connected to said first voltage control oscillator circuit.

3. The wireless stereo synchronizing transceiver as claimed in claim 2, wherein said amplifier assembly comprises a driver amplifier electrically connected to said first voltage control oscillator circuit, a buffer amplifier electrically connected to said diver amplifier, and a power amplifier electrically connected to said buffer amplifier.

4. The wireless stereo synchronizing transceiver as claimed in claim 1, wherein said mixer circuit of said receiving processing unit is electrically connected between a band pass circuit and a down-converter.

5. The wireless stereo synchronizing transceiver as claimed in claim 1, wherein said frequency synthesizer of said synchronizing processing unit is a PLL (Phase Locked Loop) frequency synthesizer.
